(19) Europäisches Patentamt
European Patent Office
Office européen des brevets

(11) **EP 2 571 761 B1**

(12) **EUROPÄISCHE PATENTSCHRIFT**

(45) Veröffentlichungstag und Bekanntmachung des Hinweises auf die Patenterteilung:
**22.04.2015   Patentblatt 2015/17**

(21) Anmeldenummer: **11720489.1**

(22) Anmeldetag: **19.05.2011**

(51) Int Cl.:
**B64C 27/14** *(2006.01)*     **B64C 27/52** *(2006.01)*
**B64D 27/24** *(2006.01)*

(86) Internationale Anmeldenummer:
**PCT/EP2011/058120**

(87) Internationale Veröffentlichungsnummer:
**WO 2011/144688 (24.11.2011 Gazette 2011/47)**

(54) **ANTRIEBSSYSTEM FÜR HUBSCHRAUBER**

POWER PLANT FOR HELICOPTER

INSTALLATION MOTRICE POUR HÉLICOPTÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2010   DE 102010021024**

(43) Veröffentlichungstag der Anmeldung:
**27.03.2013   Patentblatt 2013/13**

(73) Patentinhaber:
• **Airbus Defence and Space GmbH**
  **85521 Ottobrunn (DE)**
• **AIRBUS HELICOPTERS DEUTSCHLAND GmbH**
  **86609 Donauwörth (DE)**

(72) Erfinder:
• **BOTTI, Jean**
  **80538 München (DE)**
• **STUHLBERGER, Johannes**
  **83684 Tegernsee (DE)**
• **JÄNKER, Peter**
  **85521 Riemerling (DE)**
• **NIESL, Georg**
  **81243 München (DE)**
• **KLÖPPEL, Valentin**
  **81827 München (DE)**

(74) Vertreter: **Maiwald Patentanwalts GmbH**
**Engineering**
**Elisenhof**
**Elisenstrasse 3**
**80335 München (DE)**

(56) Entgegenhaltungen:
| | |
|---|---|
| EP-A1- 1 630 097 | EP-A2- 2 159 903 |
| CH-A- 422 530 | DE-A1-102007 013 732 |
| DE-A1-102008 028 866 | DE-B1- 1 581 060 |
| DE-U1-202007 006 976 | GB-A- 2 419 122 |
| US-A- 4 953 811 | US-A1- 2006 060 693 |
| US-A1- 2009 140 095 | |

**Beschreibung**

Gebiet der Erfindung

Die Erfindung betrifft einen Hauptrotorantrieb für einen Hubschrauber, einen Hubschrauber mit einem Hauptrotorantrieb und einem Heckrotorantrieb, sowie ein Verfahren zum Betreiben eines Hubschraubers.

Hintergrund der Erfindung

Heutige Hubschrauber weisen oft eine geringe Effizienz des Antriebssystems auf. Zudem ist der Antrieb oft sehr laut. Die Hauptgetriebe haben ein festes Übersetzungsverhältnis, sind oft verhältnismäßig teuer und weisen ein begrenztes Drehmomentvermögen auf.

Der Antriebsstrang bekannter Hubschrauber weist eine Verbrennungsmaschine und ein mechanisches Hauptgetriebe auf. Oft werden Turbinenwellenantriebe oder Hubkolbenmotoren verwendet.

Ein Helikopter mit einer Taumelscheibenbetätigungsvorrichtung ist in der DE 10 2008 028 866 A1 sowie in der WO 2009/153236 A2 beschrieben.

Die US 2009/0140095 und die DE 20 2007 006 976 U1 beschreiben jeweils einen Hauptrotorantrieb für Hubschrauber mit einer elektrischen Maschine, die als Hochdrehmomentmaschine ausgebildet ist, zum direkten Antrieb des Hauptrotors. Bei dem Hubschrauber der DE 20 2007 006 976 U1 sind die elektrische Maschine und der Hauptrotor als Einheit gegenüber der Zelle des Hubschraubers kardanisch aufgehängt. Die Zelle weist einen Energielieferanten, z.B. eine Hochleistungsbatterie auf. Der Energielieferant ist lösbar mit der Zelle verbunden und kann abgeworfen werden. Der Heckrotor des Hubschraubers wird ebenfalls durch eine elektrische Maschine angetrieben.

Die US 4 953 811 beschreibt einen als Reluktanzmotor ausgebildeten Heckrotor eines Hubschraubers; an den Spitzen der Rotorblätter des Heckrotors sind Permanentmagneten angebracht, und in einem ringförmig die Rotorblätter umgebenden Gehäuse sind Feldspulen vorgesehen.

Die EP 2 159 903 A2 beschreibt eine elektrische Permanentmagnet-Transversflussmaschine, die auch als Antriebsmotor für einen elektrischen Hubschrauber geeignet ist.

Die GB 2 419 122 A beschreibt ein Einpersonen-VTOL-Luftfahrzeug mit einer Zelle und einem Rotorkopfabschnitt mit zumindest zwei Rotoren, wobei der Rotorkopfabschnitt über eine Kipplagerunigsvorrichtung, die ein Kipplager und einen Kippaktuator aufweist, an der Zelle angelenkt ist.

Die EP 1 630 097 A1 beschreibt einen Hubschrauber mit einem Hauptrotor, der eine aktive Klappensteuerung zur Minderung von Vibrationen des Hauptrotors aufweist.

Die CH 422 530 beschreibt ein VTOL-Flugzeug, welches einen antreibbaren, für den Vorwärtsflug auskuppelbaren Rotor aufweist, sowie eine am Heck angeordnete luftbeschleunigende Einrichtung, die in einer im Wesentlichen horizontalen Ebene schwenkbar ist, wobei die Beschleunigungrichtung der Luft bei Start, Schweben und Landung des Flugzeuges annähernd senkrecht zur Längsachse des Flugzeuges ist, um das freie Drehmoment des Rotors auszugleichen, während bei dem Lösen der Verbindung zwischen Rotor und Antrieb gleichzeitig die Beschleunigungsrichtung der Luft der Einrichtung parallel zur Längsachse des Flugzeuges geschwenkt wird. Weiterhin ist ein zur Steuerung des Flugzeuges beim Vorwärtsflug bestimmtes Leitwerk vorgesehen.

Die DE 1581060 B1 beschreibt einen Hubschrauber mit einem um eine senkrechte Achse schwenkbaren Heckrotor und einem Seitenleitwerk, wobei der Heckrotor, mit oder ohne Getriebe, in geringem Maße in Richtung seiner Drehachse gegen die Wirkung einer Schubmesseinrichtung verschiebbar ist, die den Schub des Heckrotors während dessen Schwenkung mittels einer auf dessen Blattwinkeleinstellvorrichtung wirkenden Regeleinrichtung auf einen konstanten, nahe bei Null liegenden Wert steuert.

Die US 2006/0060693 A1 beschreibt einen Hubschrauber mit einem Rumpf, oberhalb von welchem ein Rotorführungsring vorgesehen ist, in welchem sich ein Hauptrotor dreht. In der Länge verstellbare Stützen verbinden den Rumpf mit dem Rotorführungsring und ermöglichen so eine Verkippung des Rotorführungsrings mit dem Hauptrotor gegenüber dem Rumpf. Am Heck des Hubschraubers kann ein Druckpropeller vorgesehen sein. Für den Antrieb des Hauptrotors und des Druckpropellers kann eine elektrische Maschine eingesetzt werden.

Zusammenfassung der Erfindung

Aufgabe der Erfindung ist es, einen verbesserten Hauptrotorantrieb für Hubschrauber bereitzustellen.

Diese Aufgabe wird durch den Gegenstand des Patentanspruchs gelost. Weiterbildungen der Erfindung ergeben sich aus den Unteransprüchen.

Gemäß der Erfindung ist ein Hauptrotorantrieb für einen Hubschrauber (Helikopter) angegeben, der eine elektrische Maschine zum direkten Antrieb des Hauptrotors des Hubschraubers aufweist. Bei der elektrischen Maschine handelt es sich um eine Hochdrehmomentmaschine.

Auf diese Weise kann beispielsweise die Drehzahl des Hauptrotors in einem großen Intervall eingestellt werden. Aufgrund der sehr variablen Drehzahl des Rotors kann der Energieverbrauch optimiert werden. Auch können das Leistungs- und Emissionsverhalten des Hubschraubers optimiert werden. Aufgrund des direkten Antriebs des Rotors können zusätzliche mechanische Elemente wie Kupplung oder Taumelscheibe vereinfacht ausgeführt werden oder gänzlich entfallen.

Gemäß einem weiteren Aspekt der Erfindung weist ein Hubschrauber einen Hauptrotorantrieb, wie voranstehend geschilderte, auf sowie einen Heckrotorantrieb, der ebenfalls eine elektrische Maschine zum direkten Antrieb des Heckrotors des Hubschraubers aufweist, wobei es sich bei der elektrischen Maschine um eine Hochdrehmomentmaschine handelt. Somit ist beispielsweise der Heckrotorantrieb von Hauptrotorantrieb mechanisch entkoppelt.

Gemäß einem weiteren Aspekt der Erfindung ist die Verwendung eines oben und im Folgenden beschriebenen Hauptrotorantriebs und/oder eines oben und im Folgenden beschriebenen Heckrotorantriebs in einem Hubschrauber angegeben.

Es kann als ein Kern der Erfindung angesehen werden, dass eine elektrische Maschine den Hauptrotor bzw. den Heckrotor direkt antreibt. Auf diese Weise ist es prinzipiell möglich, die elektrische Maschine zusammen mit dem entsprechenden Rotor zu bewegen, beispielsweise zu verkippen. Da der Antrieb eines jeden Rotors durch eine elektrische Maschine erfolgt, können die Drehzahlen in einem großen Drehzahlbereich variiert werden. Eine Kupplung ist nicht erforderlich.

Die Rotoren können also mit elektrischen Hochdrehmomentmaschinen angetrieben sein. Bei einer Ausführungsform der Erfindung handelt es sich bei der elektrischen Hochdrehmomentmaschine um einen trägheitsarmen Direktantrieb mit hoher Leistungsdichte. Ein Beispiel für einen solchen Direktantrieb ist in der DE 10 2007 013 732 A1 beschrieben.

Bei einer weiteren Ausführungsform der Erfindung sind die Rotoren dieser elektrischen Maschinen scheibenförmig. Die Maschinen können hochredundant ausgeführt sein. Hierfür kann eine Vielzahl von Statoren und Rotoren axial angeordnet sein. Diese axial angeordneten Statoren und Rotoren können mit der Hauptrotorwelle bzw. dem Heckrotorkranz oder der Heckrotorwelle verbunden sein. Weiterhin können bei einer weiteren Ausführungsform der Erfindung, die Spulen der Statoren unterteilt und von zugeordneten einzelnen Leistungselektroniken versorgt werden.

Bei der Erfindung weist der Hauptrotorantrieb weiterhin eine Lagerungsvorrichtung zum gelenkigen Befestigen der elektrischen Maschine an einer Hubschrauberzelle (also der tragenden Struktur des Hubschraubers, beispielsweise im Bereich des Kabinendaches) auf, so dass die elektrische Maschine zusammen mit dem Hauptrotor relativ zu der Hubschrauberzelle verschwenkbar ist.

Bei einer weiteren Ausführungsform der Erfindung ist die Lagerungsvorrichtung als Kipplagerungsvorrichtung mit einem Kipplager und einem Kippaktuator ausgeführt. Dadurch ist es möglich, dass Motor und Rotor zusammen um eine Achse gekippt werden. Bei dieser Achse kann es sich beispielsweise um eine Achse handeln, die quer zur Längsachse des Hubschraubers steht, so dass Motor und Rotor nach vorne und nach hinten gekippt werden können.

Bei einer weiteren Ausführungsform der Erfindung ist die Lagerungsvorrichtung als kardanische Lagerungsvorrichtung ausgeführt. Auf diese Weise ist es möglich, dass der Rotor in sämtliche Richtungen verkippt werden kann.

Bei der Erfindung ist die Lagerungsvorrichtung zur Erregung einer spezifischen Schwingungsmode der elektrischen Maschine derart ausgeführt, dass eine gegenphasige Schwingung erzeugbar ist, durch welche eine ursprüngliche Schwingung auslöschbar ist. Auf diese Weise können ungewünschte Vibrationen kompensiert werden.

Bei einer weiteren Ausführungsform der Erfindung weist der Hauptrotorantrieb eine aktive Klappensteuerung zur Minderung von Vibrationen des Hauptrotors und/oder zur Primärsteuerung des Hubschraubers auf. Unter der aktiven Klappensteuerüng ist hierbei die Einheit aus Steuerungselektronik und aerodynamischen Steuerungselementen (Klappen) zu verstehen. Entsprechend weisen die Rotorblätter des Hauptrotors Servoklappen auf, welche durch die Steuerelektronik aktiv angesteuert werden können.

Bei einer weiteren Ausführungsform der Erfindung weist der Hubschrauber neben dem Hauptrotorantrieb und/oder dem Heckrotorantrieb eine Motor-Generator-Einheit auf, welche zur Erzeugung von elektrischer Energie zum Betreiben der elektrischen Maschine vorgesehen ist.

Bei einer weiteren Ausführungsform der Erfindung ist diese Motor-Generator-Einheit unter der Kabine, z.B. einem Kabinenboden des Hubschraubers angeordnet; sie kann jedoch auch über der Kabine angeordnet sein.

Bei einem Verfahren zum Betreiben eines Hubschraubers gemäß der Erfindung kann die elektrische Hochdrehmomentmaschine zusammen mit dem Hauptrotor während des Fluges des Hubschraubers relativ zu der Hubschrauberzelle verschwenkt werden.

Hierbei ist der Heckrotorantrieb um eine vertikale Achse verschwenkbar ausgebildet und kann um diese verschwenkt werden, zur Erzielung einer Vektorsteuerung und/oder Bereitstellung einer Vortriebskomponente.

Im Folgenden werden mit Verweis auf die Figuren Ausführungsbeispiele der Erfindung beschrieben.

Kurze Beschreibung der Figuren

Fig. 1     zeigt eine elektrische Maschine für einen Hauptrotorantrieb gemäß einem Ausführungsbeispiel der Erfindung.

Fig. 2     zeigt einen Hubschrauber mit einem Hauptrotorantrieb in einem Heckrotorantrieb gemäß einem Ausführungsbeispiel der Erfindung.

Fig. 3     zeigt eine Lagerungsvorrichtung eines Hauptrotorantriebs gemäß einem Ausführungsbei-

Fig. 4      zeigt eine Klappensteuerung gemäß einem Ausführungsbeispiel der Erfindung.

Fig. 5      zeigt die Anordnung von Systemkomponenten gemäß einem Ausführungsbeispiel der Erfindung.

Fig. 6A      zeigt einen Hauptrotorantrieb gemäß einem Ausführungsbeispiel der Erfindung.

Fig. 6B      zeigt eine weitere Darstellung des Hauptrotorantriebs der Fig. 6A.

Fig. 6C      zeigt eine Schnittdarstellung des Hauptrotorantriebs der Fig. 6A.

Fig. 7      zeigt einen Heckrotorantrieb gemäß einem Ausführungsbeispiel der Erfindung.

Fig. 8      zeigt eine Schnittdarstellung eines Teils des Heckrotorantriebs der Fig. 7.

Fig. 9      zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

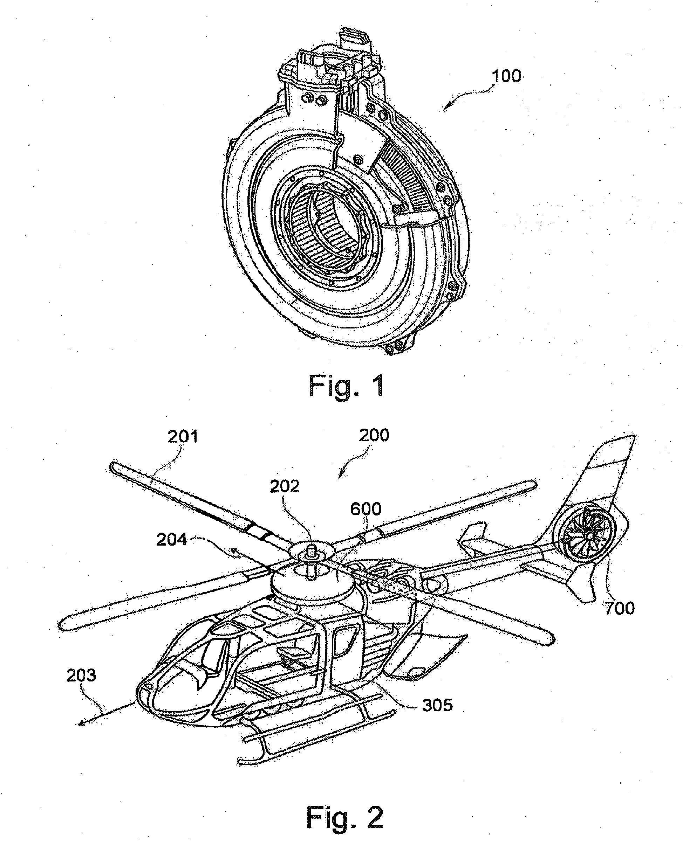

Fig. 1 zeigt eine elektrische Maschine 100 (Elektromotor) für einen Hauptrotorantrieb eines Hubschraubers. Der Hauptrotor oder der Heckrotor können direkt mit einer solchen elektrischen Hochdrehmomentmaschine angetrieben werden. Die Rotoren einer solchen elektrischen Maschine sind beispielsweise scheibenförmig ausgestaltet. Die elektrische Maschine kann hochredundant ausgeführt sein. Hierfür wird eine Vielzahl von Statoren und Rotoren axial angeordnet und mit der Hauptrotorwelle bzw. dem Heckrotorkranz verbunden. Dies ist beispielsweise in Fig. 2 zu sehen, welche die Anordnung der elektrischen Maschinen für Haupt- und Heckrotor zeigt.

Eine erste elektrische Maschine des Hauptrotorantriebs 600 ist direkt mit dem Hauptrotor 202 des Hubschraubers 200 verbunden. Der Hauptrotor 202 weist im Beispiel der Fig. 2 vier einzelne Rotorblätter 201 auf.

Weiterhin ist im Heck des Hubschraubers eine zweite elektrische Maschine vorgesehen, welche direkt mit dem Heckrotorkranz verbunden ist und ein eigenständiges Modul 700 ausbildet.

Der Hauptrotorantrieb 600 ist über eine entsprechende Lagerung mit der Hubschraüberzelle 305 verbunden.

Die Spulen der Statoren können unterteilt sein und von entsprechend zugeordneten einzelnen Leistungselektroniken versorgt werden.

Die Trennung von Energieerzeugung und Rotorenantrieb erlaubt eine größere Flexibilität der Architektur. Die aufwändig zu lagernde Heckrotorwelle entfällt. Bei einer Fenestron-Anordnung unterbleibt zudem die Störung der Rotoranströmung durch die Welle. Die Höhenposition des Heckrotors ist zudem frei wählbar.

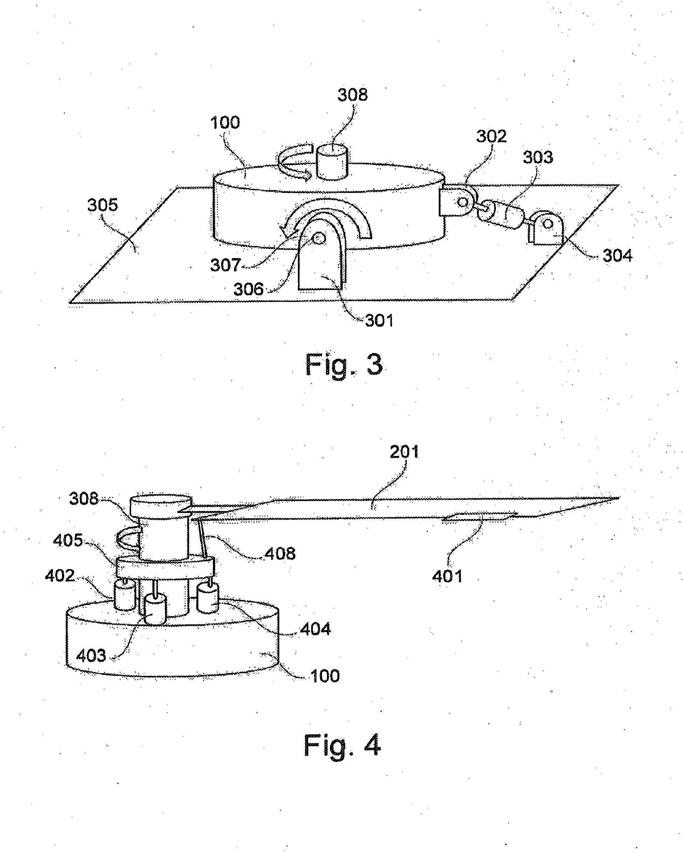

Der Wegfall der starren Anbindung des Rotorantriebs an die Hubschrauberzelle 305 erlaubt es, den Rotormast samt der elektrischen Maschine und damit den Schubvektor nach Bedarf in Längsrichtung des Hubschraubers 203 (also um die Querachse 204) zu schwenken. Hierdurch können beim Vorwärtsflug die normalerweise erforderliche große, widerstandserhöhende Anstellung des Rumpfes sowie die damit verbundenen hohen Blattwurzel-Schlagbiegemomente vermieden werden. Hierzu wird die elektrische Maschine gelenkig auf dem Kabinendach gelagert. Dies ist beispielsweise in Fig. 3 gezeigt.

An dem Kabinendach 305 (Hubschrauberzelle) ist ein Kipplager 301, das beispielsweise aus einer Querachse 306 und entsprechenden seitlichen Aufhängungen 307 besteht (wobei in der Fig. 3 nur eine der beiden seitlichen Aufhängungen zu sehen ist), angebracht.

Die elektrische Maschine 100 ist an der Querachse 306 aufgehängt und kann um diese Querachse verkippt werden. Der Rotormast 308 wird durch die elektrische Maschine 100 in Rotation versetzt und wird ebenfalls zusammen mit der elektrischen Maschine 100 um die Achse 306 verkippt.

Um das Verkippen zu steuern, ist zumindest ein Kippaktuator 303 vorgesehen, welcher über die Aufhängung 304 mit dem Kabinendach 305 und über die Aufhängung 302 mit dein Gehäuse der elektrischen Maschine 100 verbunden ist.

Der Kippwinkel bewegt sich beispielsweise zwischen 0 Grad und etwa 15 Grad nach vorne (und/oder hinten). Er kann nach Bedarf auch vergrößert werden. Auch ist es möglich, eine kardanische Aufhängung der Rotor-/Antriebseinheit vorzusehen, so dass die elektrische Maschine 100 zusammen mit dem Hauptrotor in alle Richtungen verkippt werden kann.

Die widerstandsärmste Anstellung des Hubschrauberrumpfes wird durch ein Ruder am Höhenleitwerk ermöglicht. Bei konventioneller Konfiguration würde dies hohe Mastmomente hervorrufen, welche durch das Nach-Vorne-Kippen des Rotors vermieden werden können.

Zur Reduzierung der vom Rotor auf die elektrische Maschine übertragenen Schwingungen können die Kippaktuatoren und Kipplager als aktive dynamische Komponenten mit hoher dynamischer Bandbreite vorgesehen sein. Sie erregen spezifische Schwingungsmoden des Motors in einer Weise, dass eine gegenphasige Schwingung entsteht, welche die ursprüngliche Schwingung auslöschen kann.

Die Vibrationserzeugung des Rotors kann durch eine aktive Klappensteuerung zusätzlich gemindert werden.

Fig. 4 zeigt eine solche Klappensteuerung. Diese kann zur Vibrationsdämpfung oder zur Unterstützung der konventionellen Primärsteuerung eingesetzt Werden. Im letzteren Fall erlaubt sie eine gegenüber herkömmlichen Steuersystemen verkleinerte Ausführung der klassischen Steueraktuatoren 402, 403, 404 des festen Systems (also unterhalb der "Taumelscheibe" 405). Diese Aktuatoren sind vorzugsweise, jedoch nicht notwendigerweise elektrisch ausgeführt.

Pro Blatt ist mindestens eine Klappe 401 vorgesehen. Bei der Vibrationsdämpfung werden durch die aktive Klappensteuerung zusätzliche Vibrationen erzeugt, welche den originären Vibrationen entgegenwirken. Ihre Frequenz $f_K$ liegt bei der Rotordrehfrequenz $\Omega$ * Blattzahl b multipliziert mit einem ganzzahligen Faktor n:

$$f_K = \Omega * b * n$$

Bei der Primärsteuerung durch die Servoklappe 401, unterstützt durch die Steueraktuatoren 402, 403, 404 im festen System entfällt die Übertragung der vom Piloten kommenden Steuersignale mittels des Steuergestänges. Sie erfolgt stattdessen elektrisch. Dies verhindert Störungen des Steuersignals durch die Bewegungen der elektrischen Maschine 100. Die Klappen 401 werden vorzugsweise piezoelektrisch angetrieben. Hierzu werden im Blatt gelagerte Piezoaktuatoren durch Variation der angelegten Spannung statisch und dynamisch in ihrer Länge geändert. Diese Bewegung wird in eine Drehbewegung um die Klappensteuerachse umgesetzt. Das Spannungssignal wird von einem Regelrechner geliefert.

Soll der Anstellwinkel des Rotorblatts vergrößert werden, so wird die Servoklappe nach oben ausgeschlagen. Die Anströmung drückt dadurch die Blatthinterkante nach unten, wodurch der gewünschte Effekt erreicht ist. Für eine Verringerung des Blattanstellwinkels wird die Servoklappe entsprechend nach unten ausgeschlagen.

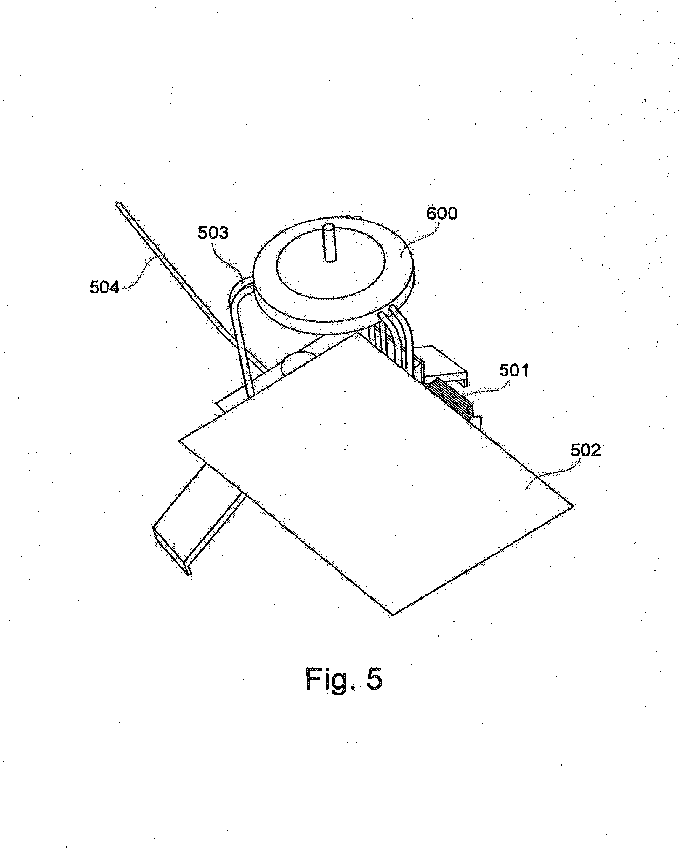

Die elektrische Versorgung der elektrischen Maschine 100 erfolgt durch eine Motor-Generator-Einheit 501, die unter dem Kabinenboden 502 des Hubschraubers untergebracht ist (siehe Fig. 5).

Der Hauptrotorantrieb 600 sowie der Heckrotorantrieb (nicht gezeigt in Fig. 5) sind über die elektrischen Leitungen 503, 504 mit der Motor-Generator-Einheit 501 verbunden.

Bei dem Motor der Motor-Generator-Einheit 501 handelt es sich beispielsweise um einen Hubkolbenmotor oder eine Turbine in Kombination mit Generatoren und einer Akkumulatoranordnung zur Speicherung der erzeugten elektrischen Energie.

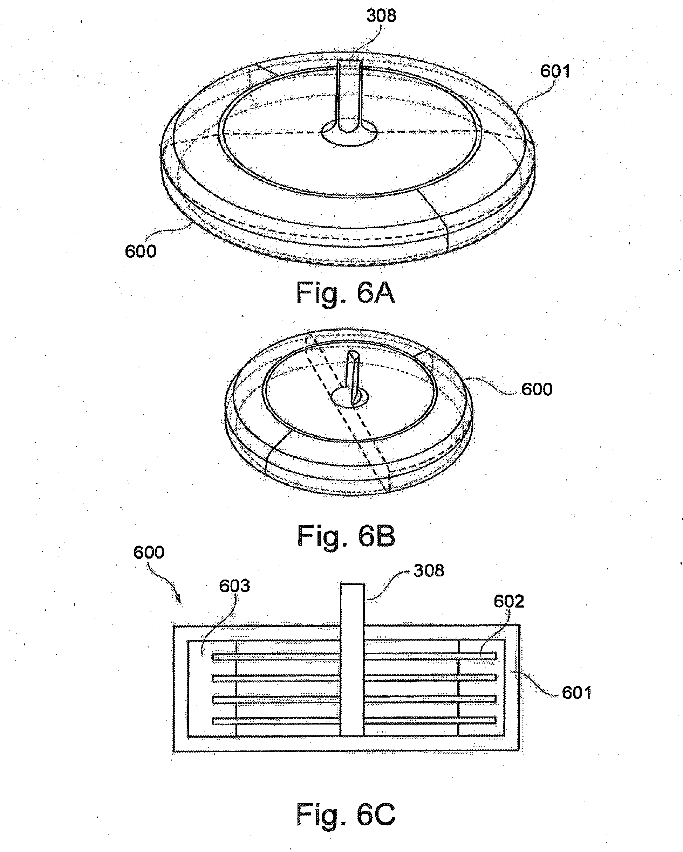

Fig. 6A zeigt einen Hauptrotorantrieb 600 mit dem Rotormast 308 und einem Gehäuse 601.

Fig. 6B zeigt den Hauptrotorantrieb 600 aus einer anderen Perspektive.

Fig. 6C zeigt eine Schnittdarstellung durch den Hauptrotorantrieb 600. Es ist ein Gehäuse 601 vorgesehen, weiches eine obere Öffnung aufweist, durch welche der Rotormast 308 geführt ist. Der Rotormast 308 ist mit einer Vielzahl (beispielsweise vier) scheibenförmigen Rotoren 602 der elektrischen Maschine verbunden. In das Gehäuse 601 sind entsprechende Statoren 603 eingebettet, welche die Rotoren 602 und damit den Rotormast 308 antreiben.

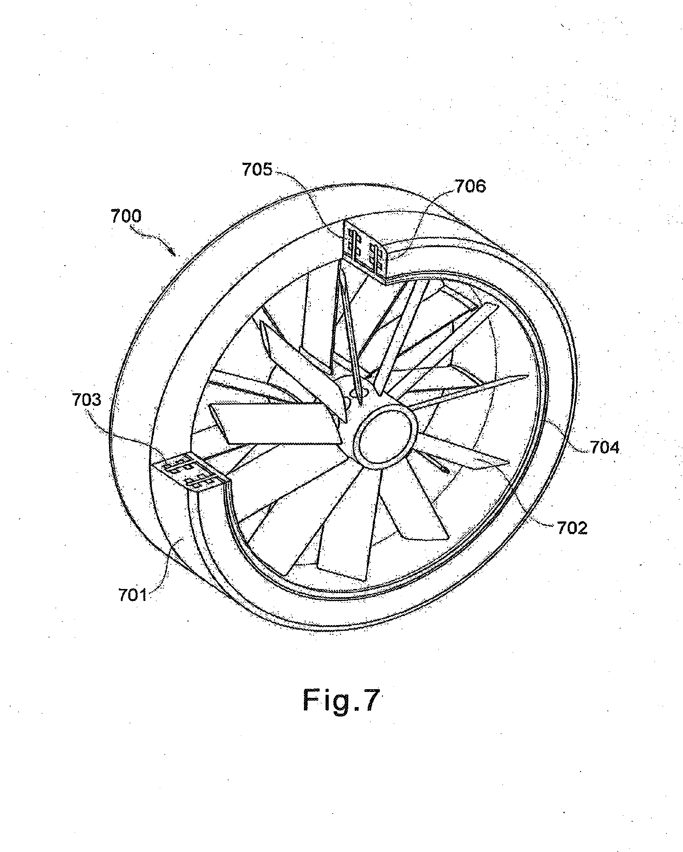

Fig. 7 zeigt einen Heckrotorantrieb 700 in ummantelter Ausführung gemäß einem Ausführungsbeispiel der Erfindung. Die einzelnen Rotorblätter 702 des Heckrotors können zwischen einem Innen- und einem Außenring 704 fest eingespannt sein. Der Heckrotoraußenring 704 stellt dann zusammen mit mehreren (beispielsweise zwei senkrecht zum Außenring 704 stehenden) Stegen 705, 706 den elektrischen Rotor dar. Die Stege sind in die Spulen 703 des Stators und das Motorgehäuse 701 eingebettet. Der Heckrotorschub wird durch die Drehzahl gesteuert.

In einer weiteren Ausführungsform entfällt der innere Ring. Der Heckrotorschub kann wieder durch die Drehzahl gesteuert werden, oder aber durch eine Verstellung der Rotorblätter um ihre Längsachse.

In wieder einer anderen Anordnung sind die Blätter nur an dem inneren Ring befestigt, welcher dann zum elektrischen Rotor eines Nabenmotors gehört. Auch hier kann der Heckrotorschub wieder durch die Drehzahl, oder aber durch eine Verstellung der Rotorblätter um ihre Längsachse gesteuert werden.

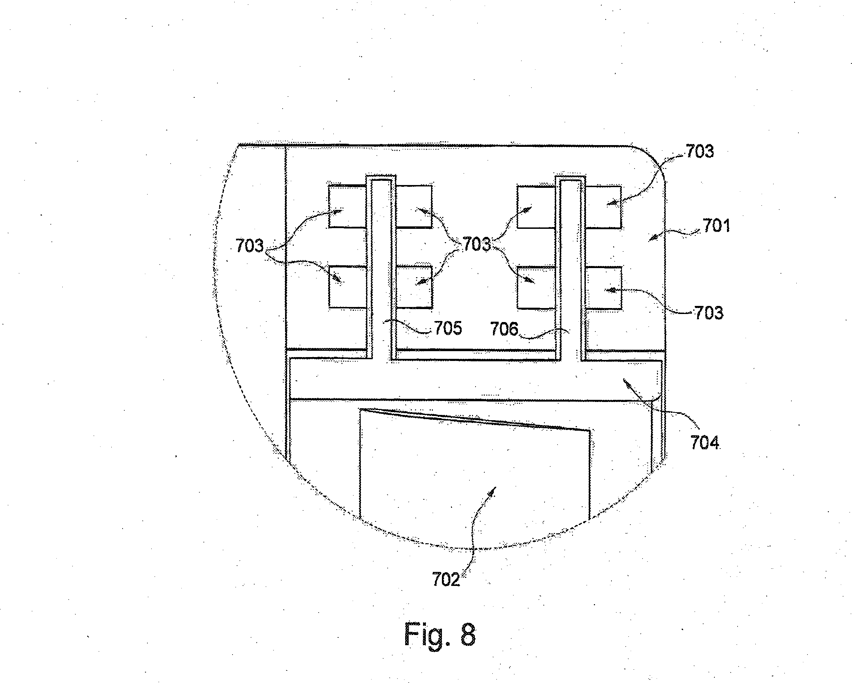

Fig. 8 zeigt eine Querschnittsansicht eines Teils des Heckrotorantriebs. In Fig. 8 ist zu sehen, wie der Außenring 704 des Heckrotors mit seinen beiden Stegen (Rotoren) 705, 706 zwischen den Spulen 703 angeordnet ist. Das Rotorblatt 702 des Heckrotors wird durch den Außenring 704 des Heckrotors bewegt und ist mit diesem verbunden. Im Bereich 701 sind Stator und Motorgehäuse angeordnet.

Generell kann der Heckrotor in freier oder ummantelter Anordnung ("Fenestron") ausgeführt sein. Ein Heckrotorantrieb in freier Ausführung kann einen elektrischen Nabenantrieb, aufweisen, so dass der Elektromotor fest mit dem Heckrotormast verbunden ist.

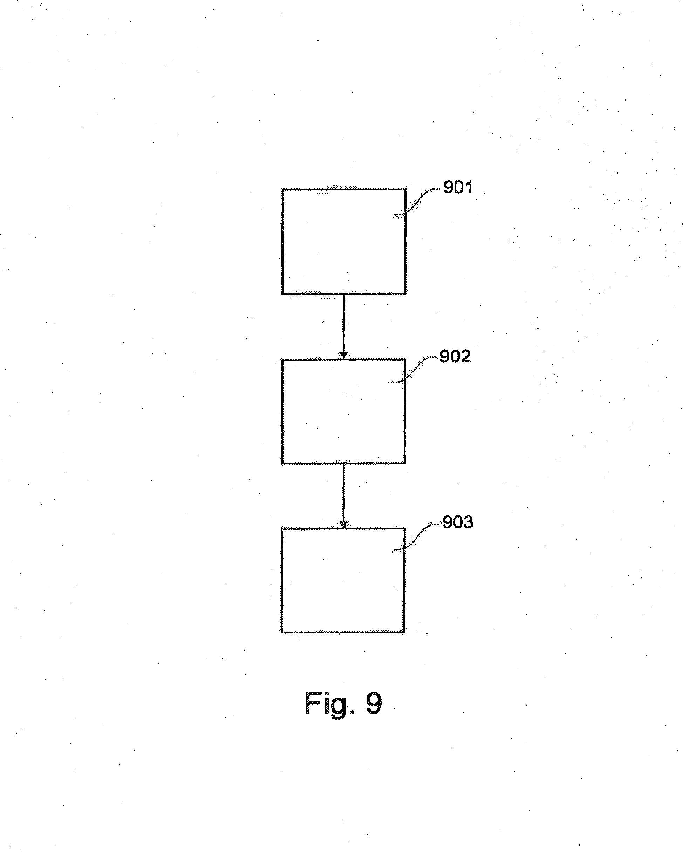

Fig. 9 zeigt ein Flußdiagramm eines Verfahrens gemäß einem Ausführungsbeispiel der Erfindung. In Schritt 901 wird über einen Verbrennungsmotor und einen Generator elektrische Energie erzeugt. In Schritt 902 wird diese elektrische Energie zum Antreiben von elektrischen Hochdrehmomentmaschinen für den Hauptrotor und den Heckrotor des Hubschraubers verwendet. In Schritt 903 wird die elektrische Hochdrehmomentmaschine des Hauptrotors während des Fluges des Hubschraubers relativ zu der Hubschrauberzelle verschwenkt, um den Hubschrauber zu beschleunigen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugzeichen in den Ansprüchen sind nicht als Einschränkungen anzusehen.

Bezugszeichenliste:

| | |
|---|---|
| 100 | Elektrische Maschine |
| 200 | Hubschrauber |
| 201 | Rotorblätter |
| 202 | Hauptrotor |
| 203 | Längsrichtung |
| 204 | Querrichtung |
| 301 | Kipplager |
| 302 | Aufhängung |
| 303 | Kippaktuator |
| 304 | Aufhängung |
| 305 | Hubschrauberzelle |
| 306 | Querachse |
| 307 | Aufhängung |
| 308 | Rotormast |
| 401 | Servoklappe |
| 402 | Steueraktuator |
| 403 | Steueraktuator |
| 404 | Steueraktuator |
| 405 | Taumelscheibe |
| 408 | Steuerstange |
| 501 | Generator-Einheit |
| 502 | Kabinenboden |
| 503 | Leitungspaar |
| 504 | Leitung |
| 600 | Hauptrotorantrieb |
| 601 | Gehäuse |
| 602 | Rotoren |
| 603 | Statoren |
| 700 | Heckrotorantrieb |
| 701 | Motorgehäuse |
| 702 | Rotorblätter |
| 703 | Spulen |
| 704 | Außenring |
| 705 | Steg |
| 706 | Steg |
| 901 | Schritt 1 |
| 902 | Schritt 2 |
| 903 | Schritt 3 |

**Patentansprüche**

1. Hauptrotorantrieb für einen Hubschrauber (200), der Hauptrotörantrieb (600) aufweisend:

   eine elektrische Maschine (100) zum direkten Antrieb eines Hauptrotors (201) des Hubschraubers;

   wobei die elektrische Maschine (100) eine Hochdrehmomentmaschine ist; und
   eine Lagerungsvorrichtung (301, 302, 303, 304) zum gelenkigen Befestigen der elektrischen Maschine an einer Hubschrauberzelle (305), so dass die elektrische Maschine zusammen mit dem Hauptrotor relativ zu der Hubschrauberzelle verschwenkbar ist;
   wobei die Lagerungsvorrichtung (301, 302, 303, 304) zur Erregung einer spezifischen Schwingungsmode der elektrischen Maschine derart ausgeführt ist, dass eine gegenphasige Schwingung erzeugbar ist, durch welche eine ursprüngliche Schwingung auslöschbar ist.

2. Hauptrotorantrieb nach Anspruch 1,
   wobei es sich bei der elektrischen Maschine (100) um einen trägheitsarmen Direktantrieb mit hoher Leistungsdichte handelt.

3. Hauptrotorantrieb nach Anspruch 1 oder 2,
   wobei die elektrische Maschine (100) eine Vielzahl von Statoren (603) und Rotoren (602), die axial angeordnet sind, aufweist.

4. Hauptrotorantrieb nach einem der Ansprüche 1 bis 3,
   wobei die Lagerungsvorrichtung (301, 302, 303, 304) als Kipplagerungsvorrichtung mit einem Kipplager (301) und einem Kippaktuator (303) ausgeführt ist.

5. Hauptrotorantrieb nach einem der Ansprüche 1 bis 3,
   wobei die Lagerungsvorrichtung (301, 302, 303, 304) als kardanische Lagerungsvorrichtung ausgeführt ist.

6. Hauptrotorantrieb nach einem der vorhergehenden Ansprüche, weiterhin aufweisend:

   eine aktive Klappensteuerung zur Minderung von Vibrationen des Hauptrotors.

7. Hubschrauber mit einem Hauptrotorantrieb (600) nach einem der Ansprüche 1 bis 6 und einem Heckrotorantrieb (700), welcher aufweist:

   eine elektrische Maschine (100, 701) zum direkten Antrieb eines Heckrotors (702) des Hubschraubers;
   wobei es sich bei der elektrischen Maschine (100, 701) um eine Hochdrehmomentmaschine handelt.

8. Hubschrauber nach Anspruch 7,
   wobei der Heckrotorantrieb um eine vertikale Achse schwenkbar ausgebildet ist, zur Erzielung einer Vektorsteuerung und/oder Bereitstellung einer Vortriebskomponente.

**9.** Hubschrauber nach Anspruch 7, weiterhin aufweisend:

> eine Motor-Generatoreinheit (501) zur Erzeugung von elektrischer Energie zum Betreiben der elektrischen Maschine (100).

**10.** Hubschrauber nach Anspruch 9, wobei die Motor-Generatoreinheit (501) unter der Kabine, z.B. einem Kabinenboden (502) des Hubschraubers angeordnet ist.

**11.** Verfahren zum Betreiben eines Hubschraubers nach einem der Ansprüche 7 bis 10, das Verfahren aufweisend den Schritt:

> Verschwenken der elektrischen Hochdrehmomentmaschine (100, 701) zusammen mit dem Hauptrotor (201) während eines Fluges des Hubschraubers relativ zu einer Hubschauberzelle.

**12.** Verfahren nach Anspruch 11, mit dem weiteren Schritt:

> Verschwenken des Heckrotors um eine vertikale Achse zur Erzielung einer Vektorsteuerung und/oder Bereitstellung einer Vortriebskomponente.

**Claims**

**1.** A main rotor drive for a helicopter (200), the main rotor drive (600) comprising:

> an electric motor (100) for directly powering a main rotor (201) of the helicopter;
> wherein the electric motor (100) is a high-torque motor;
> a mounting device (301, 302, 303, 304) for hinging the electric motor to a helicopter cell (305), so that the electric motor along with the main rotor can be pivoted relative to the helicopter cell;
> wherein the mounting device (301, 301, 303, 304) is designed for exciting a specific oscillation mode of the electric motor in such a way that an out-of-phase oscillation can be generated which can cancel an original oscillation.

**2.** The main rotor drive of claim 1, wherein the electric motor (100) is a low-inertia direct drive with a high power density.

**3.** The main rotor drive of claim 1 or 2, wherein the electric motor (100) comprises a plurality of stators (603) and rotors (602), which are axially arranged.

**4.** The main rotor drive of one of claims 1 to 3, wherein the mounting device (301, 302, 303, 304) is designed as a tilting mounting device with a tilting bearing (301) and a tilting actuator (303).

**5.** The main rotor drive of one of claims 1 to 3, wherein the mounting device (301, 302, 303, 304) is designed as a gimbaled mounting device.

**6.** The main rotor drive of one of the preceding claims, further comprising:

> an active flap controller for diminishing the vibrations of the main rotor.

**7.** A helicopter comprising a main rotor drive (600) of one of claims 1 to 6 and a tail rotor drive (700) which comprises:

> an electric motor (100, 701) for directly powering a tail rotor (702) of the helicopter;
> wherein the electric motor (100, 701) is a high-torque motor.

**8.** The helicopter of claim 7, wherein the tail rotor drive is designed pivotable around a vertical axis to achieve a vector control and/or to provide a propulsion component.

**9.** The helicopter of claim 7, further comprising:

> a motor-generator unit (501) for generating electric energy to operate the electric motor (100).

**10.** The helicopter of claim 9, wherein the motor-generator unit (501) is arranged under the cabin, e.g., a cabin floor (502), of the helicopter.

**11.** A method for operating a helicopter according to one of claims 7 to 10, the method comprising the step of:

> pivoting the electric high-torque motor (100, 701) along with the main rotor (201) relative to the helicopter cell while the helicopter is in flight.

**12.** The method of claim 11 with the additional step of:

> pivoting the tail rotor around a vertical axis to achieve a vector control and/or to provide a propulsion component.

**Revendications**

**1.** Entraînement de rotor principal pour un hélicoptère (200), l'entraînement de rotor principal (600) comprenant :

 une machine électrique (100) pour l'entraînement direct d'un rotor principal (201) de l'hélicoptère ;
 la machine électrique (100) étant une machine à couple de rotation élevé ; et
 un système de support (301, 302, 303, 304) pour la fixation articulée de la machine électrique sur une cellule d'hélicoptère (305), de sorte que la machine électrique peut pivoter avec le rotor principal par rapport à la cellule d'hélicoptère ;
 le système de support (301, 302, 303, 304) étant réalisé pour la mise en place d'un mode de vibration spécifique de la machine électrique, de telle sorte qu'une vibration en opposition de phase peut être générée, vibration par laquelle une vibration initiale peut être supprimée.

2. Entraînement de rotor principal selon la revendication 1,
 la machine électrique (100) étant un entraînement direct à faible inertie d'une densité de puissance élevée.

3. Entraînement de rotor principal selon l'une des revendications 1 ou 2,
 la machine électrique (100) présentant une multiplicité de stators (603) et de rotors (602), disposés dans la direction axiale.

4. Entraînement de rotor principal selon l'une des revendications 1 à 3,
 le système de support (301, 302, 303, 304) étant réalisé sous forme de système de support à bascule avec un palier oscillant (301) et un actuateur de basculement (303).

5. Entraînement de rotor principal selon l'une des revendications 1 à 3,
 le système de support (301, 302, 303, 304) étant réalisé sous forme de système de support à Cardan.

6. Entraînement de rotor principal selon l'une des revendications précédentes, comprenant en outre :

 une commande de volets active pour la réduction de vibrations du rotor principal.

7. Hélicoptère avec un entraînement de rotor principal (600) selon l'une des revendications 1 à 6 et un entraînement de rotor de queue (700), comprenant :

 une machine électrique (100, 701) pour l'entraînement direct d'un rotor de queue (702) de l'hélicoptère ;
 la machine électrique (100, 701) étant une machine à couple de rotation élevé.

8. Hélicoptère selon la revendication 7, l'entraînement de rotor de queue étant réalisé avec une possibilité de pivotement autour d'un axe vertical, pour obtenir une commande vectorielle et/ou fournir une composante de propulsion.

9. Hélicoptère selon la revendication 7, comprenant en outre :

 une unité moteur - générateur (501) pour produire de l'énergie électrique destinée au fonctionnement de la machine électrique (100).

10. Hélicoptère selon la revendication 9, l'unité moteur-générateur (501) étant disposée au-dessous de la cabine, par exemple un plancher de cabine (502) de l'hélicoptère.

11. Procédé de fonctionnement d'un hélicoptère selon l'une des revendications 7 à 10, le procédé comprenant l'étape :

 pivotement de la machine électrique (100, 701) à couple de rotation élevé avec le rotor principal (201), par rapport à une cellule de l'hélicoptère, pendant un vol de ce dernier.

12. Procédé selon la revendication 11, comprenant l'étape suivante :

 pivotement du rotor de queue autour d'un axe vertical pour obtenir une commande vectorielle et/ou fournir une composante de propulsion.

Fig. 1

Fig. 2

Fig. 3

Fig. 4

Fig. 5

308

601

600

## Fig. 6A

600

## Fig. 6B

600

603

308

602

601

## Fig. 6C

Fig.7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008028866 A1
- WO 2009153236 A2
- US 20090140095 A
- DE 202007006976 U1
- US 4953811 A
- EP 2159903 A2
- GB 2419122 A
- EP 1630097 A1
- CH 422530
- DE 1581060 B1
- US 20060060693 A1
- DE 102007013732 A1